# EUROPEAN PATENT APPLICATION

(11) **EP 4 002 864 A1**
(43) Date of publication of application: **25.05.2022**
(21) Application number: 20839902.2
(22) Date of filing: 13.07.2020
(51) Int. Cl.: H04Q 11/00

(54) **OPTICAL NETWORK UNIT MANAGEMENT METHOD, DEVICE, AND SYSTEM, AND STORAGE MEDIUM**

(30) Priority: 15.07.2019 CN 201910635756
(71) Applicant: ZTE Corporation, Shenzhen, Guangdong 518057 (CN)
(72) Inventor: YUAN, Liquan, Shenzhen, Guangdong 518057 (CN); XIE, Yu, Shenzhen, Guangdong 518057 (CN)
(74) Representative: Canzler & Bergmeier Patentanwälte Partnerschaft mbB
(86) International application number: PCT/CN2020/101664
(87) International publication number: WO 2021/008496

(57) **Abstract**

The present application proposes an optical network unit management method, device, and system, and a storage medium. The optical network unit management method comprises: receiving a first ONU management message sent by a management system, wherein the first ONU management message comprises an identifier of a first ONU; sending the first ONU management message to a vOMCI functional entity; receiving first OMCI information sent by the vOMCI functional entity, wherein the first OMCI information is generated by the vOMCI functional entity after the vOMCI functional entity has encapsulated the first ONU management message according to a management protocol, and the first OMCI information comprises the identifier of the first ONU; and sending the first OMCI information to the first ONU.

## Description

The present application claims priority from the Chinese patent application No. 201910635756.6 filed with the China Patent Office on July 15, 2019, the entire contents of which are incorporated herein by reference.

### TECHNICAL FIELD

The present application relates to optical communication networks, and for example, relates to a method, an apparatus and a system for managing an optical network unit, and a storage medium.

### BACKGROUND

An optical communication network mainly consists of an optical line terminal (OLT) and an optical network unit (ONU). A management platform communicates with the OLT through a management protocol so that the OLT manages related functions of a passive optical network (PON) of the ONU by an ONU management and control interface (OMCI) of the OLT itself and through an ONU management and control channel (OMCC) between the OLT and the ONU.

The software of the OMCI that performs the management function in the OLT, together with the software of the OLT that performs other functions, form a software package. However, as the management function of the OMCI is continuously enriched, each time the management function of the OMCI is upgraded, the whole software in the OLT needs to be upgraded, which involves extensive labor and needs to restart the OLT to reload the software.

### SUMMARY

With the method, the apparatus and the system for managing an optical network unit, and the storage medium provided by the present application, the updating efficiency of the OMCI function in a PON can be improved.

An embodiment of the present application provides a method for managing an optical network unit (ONU), including: receiving a first ONU management message sent from a management system, where the first ONU management message contains an identifier of a first ONU; sending the first ONU management message to a virtual ONU management and control interface (vOMCI) vOMCI function entity; receiving first OMCI information sent from the vOMCI function entity, where the first OMCI information is generated by the vOMCI function entity after encapsulating the first ONU management message according to a management protocol, and the first OMCI information contains the identifier of the first ONU; and sending the first OMCI information to the first ONU.

An embodiment of the present application provides a method for managing an optical network unit (ONU), including: receiving a first ONU management message sent from an OLT, where the first ONU management message contains an identifier of a first ONU, the first ONU management message is received by the OLT from a management system; encapsulating the first ONU management message according to a management protocol to generate first OMCI information, where the first OMCI information contains the identifier of the first ONU; and sending the first OMCI information to the OLT, where the first OMCI information is configured to cause the OLT to send the first OMCI information to the first ONU.

An embodiment of the present application provides an apparatus for managing an optical network unit (ONU), including: a first receiving module configured to receive a first ONU management message sent from a management system, where the first ONU management message contains an identifier of a first ONU; a first sending module configured to send the first ONU management message to a virtual ONU management and control interface (vOMCI) vOMCI function entity; a second receiving module configured to receive first OMCI information sent from the vOMCI function entity, where the first OMCI information is generated by the vOMCI function entity encapsulating the first ONU management message according to a management protocol, and the first OMCI information contains the identifier of the first ONU; and a second sending module configured to send the first OMCI information to the first ONU.

An embodiment of the present application provides an apparatus for managing an optical network unit (ONU), including: a fifth receiving module configured to receive a first ONU management message sent from an OLT, where the first ONU management message contains an identifier of a first ONU, and the first ONU management message is received by the OLT from a management system; a processing module configured to encapsulate the first ONU management message according to a management protocol to generate first OMCI information, where the first OMCI information contains the identifier of the first ONU; and a fifth sending module configured to send the first OMCI information to the OLT, where the first OMCI information is configured to cause the OLT to send the first OMCI information to the first ONU.

An embodiment of the present application provides a system for managing an optical network unit (ONU), including an optical line terminal (OLT) and a virtual ONU management and control interface (vOMCI) function entity. The OLT includes an apparatus for managing an ONU at the OLT side according to any embodiment of the present application. The vOMCI function entity includes an apparatus for managing an ONU at the vOMCI function entity side according to any embodiment of the present application.

An embodiment of the present application provides a storage medium having a computer program stored thereon which, when executed by a processor, causes the method for managing an ONU at the OLT side according to any embodiment of the present application to be implemented.

An embodiment of the present application provides a storage medium having a computer program stored thereon which, when executed by a processor, causes the method for managing an ONU at the vOMCI function entity side according to any embodiment of the present application to be implemented.

With respect to the above embodiments and other aspects of the present application and implementations thereof, further description will be provided in the drawings, the detailed embodiments and the claims.

### BRIEF DESCRIPTION OF DRAWINGS

FIG. 1 is a schematic diagram showing a network architecture of a PON provided in an embodiment;
FIG. 2 is a flowchart of a method for managing an ONU according to an embodiment;
FIG. 3 is a flowchart of another method for managing an ONU according to an embodiment;
FIG. 4 is a flowchart of another method for managing an ONU according to an embodiment;
FIG. 5 is a flowchart of another method for managing an ONU according to an embodiment;
FIG. 6 is a schematic structural diagram of an apparatus for managing an ONU according to an embodiment;
FIG. 7 is a schematic structural diagram of another apparatus for managing an ONU according to an embodiment;
FIG. 8 is a schematic structural diagram of another apparatus for managing an ONU according to an embodiment;
FIG. 9 is a schematic structural diagram of another apparatus for managing an ONU according to an embodiment;
FIG. 10 is a schematic structural diagram of another apparatus for managing an ONU according to an embodiment;
FIG. 11 is a schematic structural diagram of another apparatus for managing an ONU according to an embodiment; and
FIG. 12 is a schematic structural diagram of another system for managing an ONU according to an embodiment.

### DETAIL DESCRIPTION OF EMBODIMENTS

Embodiments of the present application will be described below with reference to the accompanying drawings.

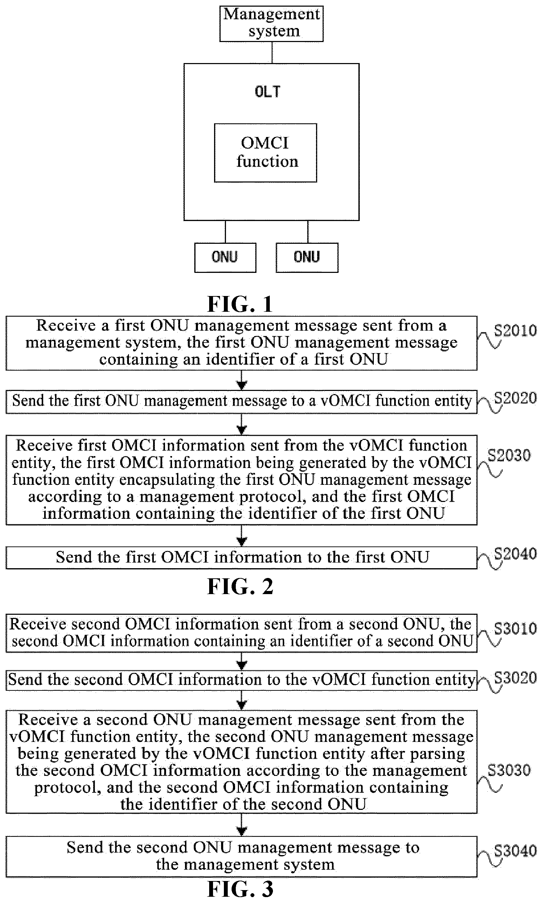

FIG. 1 is a schematic diagram showing network architecture of a PON provided in an embodiment. As shown in FIG. 1, the PON is composed of an OLT and an ONU, the number of the OLT may be one or more, and the number of the ONU may be one or more. One OLT may be connected to one or more ONUs. FIG. 1 illustrates an example of one OLT and two ONUs. The OLT communicates with a management system through a management protocol, and transmits/receives various management messages to/from the management system over the PON network. The OLT utilizes its own ONU management and control interface (OMCI) and an ONU management and control channel (OMCC) between the OLT and an ONU to implement management of the ONU. However, the OMCI function is implemented by software in the OLT, and as the management function of the OMCI is continuously enriched, the OMCI function in the OLT needs to be updated constantly. Since the OMCI function in the OLT forms an integrated unified software package together with other functions, the update of the OMCI function requires the whole software in the OLT needs to be updated to update the OMCI function, which involves extensive labor. Further, when a large number of OLTs are deployed in the network, the OLTs needs to be updated one by one, leading to a very low efficiency.

FIG. 2 is a flowchart of a method for managing an ONU according to an embodiment. As shown in FIG. 2, the method according to the embodiment includes the following steps S2010 to S2040.

At step S2010, receiving a first ONU management message sent from a management system, the first ONU management message containing an identifier of a first ONU.

The method for managing an ONU provided in the embodiment is applied to an OLT in a PON. When the management system requires to manage a first ONU connected in the PON, the management system needs to send a first ONU management message containing an identifier of the first ONU to the OLT connected to the first ONU. The management system is a unified network management function in the network or a network entity with a network management function, and is configured for managing ONUs in the PON. In order to manage the first ONU in the PON, the management system needs to send the first ONU management message contains the identifier of the first ONU to the OLT connected to the first ONU according to a management requirement.

At step S2020, sending the first ONU management message to a vOMCI function entity.

A virtual ONU management and control interface (virtual OMCI, or vOMCI) function entity is a virtual OMCI function module or entity software capable of generating management information conforming to an OMCI information format, and the vOMCI function entity is deployed in a physical device independent of the OLT. The vOMCI function entity is connected to the OLT, and perform data transmission through a predefined network protocol. The vOMCI function entity can realize one or more OMCI management functions, equivalent to deploying the OMCI functions of the OLT in other devices independent of the OLT. Then, after receiving the first ONU management message sent from the management system, the OLT, instead of processing the first ONU management message, directly forwards the first ONU management message to the vOMCI function entity.

By deploying the OMCI functions in other vOMCI function entities independent of the OLT, when any OMCI function needs to be upgraded or updated, merely the vOMCI function entity, instead of the whole software in the OLT, needs to be upgraded or updated, thereby improving the upgrading or updating efficiency of the OMCI functions. The vOMCI function entity may be connected to each OLT in the PON, so that in one PON, there may be provided only one vOMCI function entity. As such, when the scale of the PON is large, it is only necessary to maintain the vOMCI function entity, but not necessary to update or upgrade each OLT, thereby improving the upgrading efficiency of the OMCI functions.

The network protocol used for interaction between the vOMCI function entity and the OLT may be a remote procedure call (RPC), a Google RPC (gRPC), or other protocols.

Optionally, before sending the first ONU management message to the vOMCI function entity, the OLT may firstly judge whether the received first ONU management message is managed by the vOMCI function entity. The first ONU management message is sent to the vOMCI function entity only if the first ONU management message is managed by the vOMCI function entity. If the OLT judges that the first ONU management message does not need to be managed by the vOMCI function entity, the OMCI function of the OLT parses the first ONU management message and generates third OMCI information containing the identifier of the first ONU, and then the OLT sends the third OMCI information to the first ONU.

The OLT deployed in the PON has a certain OMCI management function and can process a part of the OMCI management functions. If the OLT itself has an OMCI management function, the OLT does not need to transfer its own OMCI management function to a vOMCI function entity for management, and the OLT may use the OMCI function configured by itself for management. Therefore, after receiving the first ONU management message, the OLT may judge whether the management function corresponding to the first ONU management message is managed by the vOMCI. If the management function corresponding to the first ONU management message is managed by the vOMCI, the OLT sends the first ONU management message to the vOMCI; otherwise, the OMCI function of the OLT parses the first ONU management message, generates third OMCI information containing the identifier of the first ONU, and then sends the third OMCI information to the first ONU.

Alternatively, the vOMCI may also manage some designated ONUs; and after receiving the first ONU management message, the OLT may judge whether the first ONU management message is managed by the vOMCI function entity by judging whether the first ONU management message contains the identifier of the first ONU, wherein the first ONU is an ONU supporting management by the vOMCI function entity (supporting being managed by the vOMCI function entity). If the OLT judges that the first ONU management message contains an identifier of a first ONU, and the first ONU is an ONU supporting management by the vOMCI function entity, the OLT sends the first ONU management information to the vOMCI.

The vOMCI function entity may also include all the OMCI functions, and thus, when receiving the first ONU management message, the OLT may directly send the ONU management message to the vOMCI function entity. The OMCI function in the OLT merely serves as a data interface for interaction with the vOMCI function entity.

In addition, the vOMCI function entity may be obtained by integrating various supported OMCI functions into one unified function module or entity software, or the function module or entity software for each OMCI function in the vOMCI function entity may be provided independently, that is, the vOMCI function entity includes a plurality of subsets of vOMCI function entities, such as a vOMCI function entity 1, a vOMCI function entity 2, ..., etc. As such, when receiving the first ONU management message, the OLT may further determine a vOMCI function entity where the management function corresponding to the first ONU management message is located, and send the first ONU management message to the vOMCI function entity where the management function corresponding to the first ONU management message is located. When the vOMCI function entity includes a plurality of subsets of vOMCI function entities, updating or upgrading of the vOMCI function entity will become more convenient, since it merely needs to add a new subset of vOMCI function entities or update the subset including the vOMCI function entity which requires to be updated.

At step S2030, receiving first OMCI information sent from the vOMCI function entity, where the first OMCI information is generated by the vOMCI function entity encapsulating the first ONU management message according to a management protocol, and the first OMCI information contains the identifier of the first ONU.

After receiving the first ONU message, the vOMCI function entity encapsulates the first ONU management message according to an OMCI function pre-configured in the management protocol, to generate the first OMCI information. The first OMCI information is obtained by processing the first ONU management message according to a management requirement of the management system, and then the ONU having received the first OMCI information may execute corresponding processing or give corresponding feedback according to the content indicated by the first OMCI information. Since the first OMCI information is generated according to the first ONU management message and is configured for managing the first ONU, the first OMCI information contains the identifier of the first ONU. After the first OMCI information is generated by the vOMCI function entity, the OLT may receive the first OMCI information sent from the vOMCI function entity.

The OLT may send the first ONU management message to the vOMCI function entity through a first channel, and receive the first OMCI information sent from the vOMCI function entity through a second channel. The first channel and the second channel are logical channels between the OLT and the vOMCI function entity, and the first channel and the second channel may work on the same physical link.

At step S2040, sending the first OMCI information to the first ONU.

After receiving the first OMCI information sent from the vOMCI function entity, the OLT sends the first OMCI information to the first ONU since the first OMCI information contains the identifier of the first ONU, thereby completing the OMCI management of the first ONU in the PON. The OLT sends the first OMCI information to the first ONU through the OMCC connected to the first ONU.

According to the method for managing an ONU provided in the embodiment, after receiving the first ONU management message containing the identifier of the first ONU sent from the management system, the first ONU management message is sent to a vOMCI function entity, and then first OMCI information containing the identifier of the first ONU sent from the vOMCI function entity is received and sent to the first ONU. Since the ONU management message is processed by the vOMCI function entity, the problem that software in the OLT needs to be updated when an OMCI function needs to be upgraded or updated in the case where the OMCI function is deployed in the OLT is avoided, thereby improving the updating efficiency of the OMCI function.

FIG. 3 is a flowchart of another method for managing an ONU according to an embodiment. As shown in FIG. 3, the method according to the embodiment includes the following steps S3010 to S3040.

At step S3010, receiving second OMCI information sent from a second ONU, the second OMCI information containing an identifier of a second ONU.

In the embodiment of FIG. 2, the management flow of managing an ONU by a management system is shown. For some functions of managing an ONU, however, the ONU needs to feed corresponding information back to the management system after completing the function instructed by the management system. This embodiment shows a process of feeding back information to the management system from the ONU.

When the second ONU connected to the OLT completes the related function instructed by the management system, the second ONU sends second OMCI information to the OLT if corresponding feedback information is desired. The second ONU is any ONU connected to the OLT, and may be the same as or different from the first ONU shown in FIG. 2. The second OMCI information received by the OLT contains the identifier of the second ONU.

At step S3020, sending the second OMCI information to the vOMCI function entity.

Similar to the embodiment shown in FIG. 2, after the vOMCI function entity is deployed, the OLT sends the second OMCI information to the vOMCI function entity. The function and processing method of the vOMCI function entity in this embodiment are similar to those in the embodiment shown in FIG. 2, except that the data flow direction in FIG. 2 is: management system-OLT-vOMCI-OLT-ONU, while the data flow direction in this embodiment is: ONU-OLT-vOMCI-OLT-management system, but the same interaction manner is adopted between the OLT and the vOMCI.

At step S3030, receiving a second ONU management message sent from the vOMCI function entity, where the second ONU management message is generated by the vOMCI function entity after parsing the second OMCI information according to the management protocol, and the second OMCI information contains the identifier of the second ONU.

After parsing the second OMCI information according to the management protocol, the vOMCI function entity generates second ONU management message, and the OLT will receive the second ONU management message sent from the vOMCI.

At step S3040, sending the second ONU management message to the management system.

Finally, the OLT sends the second ONU management message to the management system so that the management system will not perceive existence of the vOMCI, and the management system does not need to be upgraded or updated. In this manner, it merely needs to add a new vOMCI function entity, thereby improving the upgrading or updating efficiency of the OMCI function.

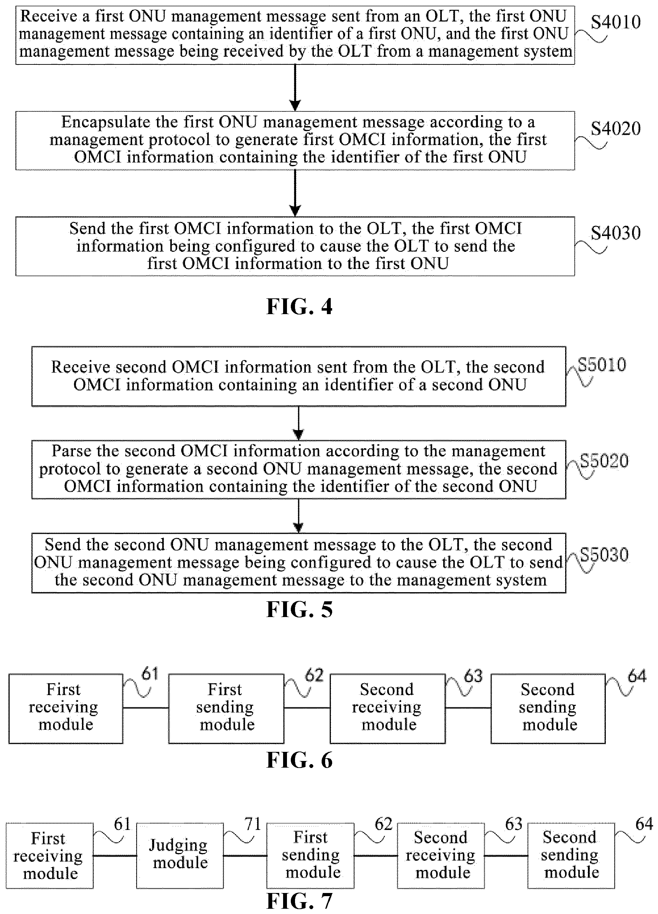

FIG. 4 is a flowchart of another method for managing an ONU according to an embodiment. As shown in FIG. 4, the method according to the embodiment includes the following steps S4010 to S4030.

At step S4010, receiving a first ONU management message sent from an OLT, the first ONU management message containing an identifier of a first ONU, and the first ONU management message being received by the OLT from a management system.

At step S4020, encapsulating the first ONU management message according to a management protocol to generate first OMCI information, the first OMCI information containing the identifier of the first ONU.

At step S4030, sending the first OMCI information to the OLT, the first OMCI information being configured to cause the OLT to send the first OMCI information to the first ONU.

The method for managing an optical network unit provided in this embodiment is applied to a vOMCI, and illustrates the processing flow of the vOMCI in the embodiment of the method for managing an optical network unit shown in FIG. 2. The implementation manner and technical effect of the method for managing an optical network unit provided in this embodiment have already been described in the embodiment shown in FIG. 2, and thus are not repeated herein.

FIG. 5 is a flowchart of another method for managing an ONU according to an embodiment. As shown in Fig. 5, the method according to the embodiment includes the following steps S5010 to S5030.

At step S5010, receiving second OMCI information sent from the OLT, the second OMCI information containing an identifier of a second ONU.

At step S5020, parsing the second OMCI information according to the management protocol to generate a second ONU management message, the second OMCI information containing the identifier of the second ONU.

At step S5030, sending the second ONU management message to the OLT, the second ONU management message being configured to cause the OLT to send the second ONU management message to the management system.

The method for managing an optical network unit provided in this embodiment is applied to a vOMCI, and illustrates the processing flow of the vOMCI in the embodiment of the method for managing an optical network unit shown in FIG. 3. The implementation manner and technical effect of the method for managing an optical network unit provided in this embodiment have already been described in the embodiment shown in FIG. 3, and thus are not repeated herein.

FIG. 6 is a schematic structural diagram of an apparatus for managing an ONU according to an embodiment. As shown in FIG.6, the apparatus for managing an optical network unit (ONU) provided in this embodiment includes: a first receiving module 61 configured to receive a first ONU management message sent from a management system, where the first ONU management message contains an identifier of a first ONU; a first sending module 62 configured to send the first ONU management message to a virtual ONU management and control interface (vOMCI) vOMCI function entity; a second receiving module 63 configured to receive first OMCI information sent from the vOMCI function entity, where the first OMCI information is generated by the vOMCI function entity encapsulating the first ONU management message according to a management protocol, and the first OMCI information contains the identifier of the first ONU; and a second sending module 64 configured to send the first OMCI information to the first ONU.

The apparatus for managing an ONU provided in this embodiment is used to implement the method for managing an ONU in the embodiment shown in FIG. 2. As for the implementation principle and technical effect of the apparatus for managing an ONU provided in this embodiment, reference may be made to the embodiment shown in FIG. 2, which are not repeated herein.

FIG. 7 is a schematic structural diagram of another apparatus for managing an ONU according to an embodiment. As shown in FIG. 7, based on FIG. 6, the apparatus for managing an optical network unit (ONU) provided in this embodiment further includes: a judging module 71 configured to judge whether the first ONU management message is managed by the vOMCI function entity; and a first sending module 62 configured to send, in response to a judgment result that the first ONU management message is managed by the vOMCI function entity, the first ONU management message to the vOMCI function entity.

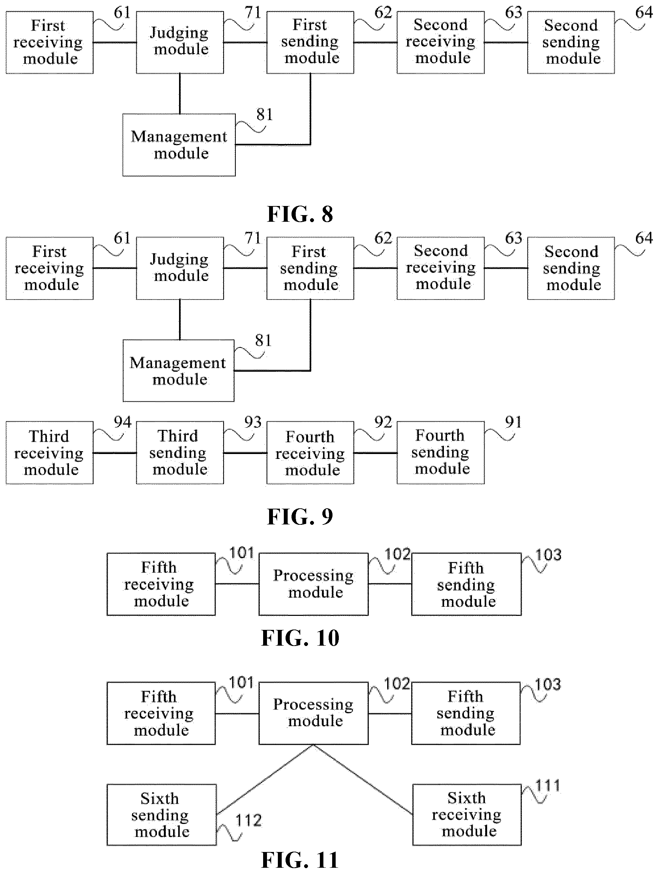

FIG. 8 is a schematic structural diagram of another apparatus for managing an ONU according to an embodiment. As shown in FIG. 8, based on FIG. 7, the apparatus for managing an optical network unit (ONU) provided in this embodiment further includes: a management module 81 configured to parse, by an OMCI function of an optical line terminal (OLT) in response to a judgment result that the first ONU management message is not managed by the vOMCI function entity, the first ONU management message to generate third OMCI information, where the third OMCI information contains the identifier of the first ONU; and a first sending module 62 configured to send the third OMCI information to the first ONU.

In an embodiment, in the embodiment shown in FIG. 7 or FIG. 8, the judging module 71 is configured to judge whether the first ONU management message contains an identifier of a first ONU, the first ONU being an ONU supporting management by the vOMCI function entity.

In an embodiment, in the embodiment shown in FIG. 7 or FIG. 8, the judging module 71 is configured to judge whether a management function corresponding to the first ONU management message is managed by the vOMCI.

In an embodiment, in the embodiment shown in FIG. 7 to FIG. 8, the first sending module 62 is configured to send the first ONU management message to the vOMCI function entity where the management function corresponding to the first ONU management message is located.

FIG. 9 is a schematic structural diagram of another apparatus for managing an ONU according to an embodiment. As shown in FIG. 9, based on FIG. 8, the apparatus for managing an optical network unit (ONU) provided in this embodiment further includes: a third receiving module 91 configured to receive second OMCI information sent from a second ONU, where the second OMCI information contains an identifier of the second ONU; a third sending module 92 configured to send the second OMCI information to the vOMCI function entity; a fourth receiving module 93 configured to receive a second ONU management message sent from the vOMCI function entity, where the second ONU management message is generated by the vOMCI function entity after the vOMCI function entity parsing the second OMCI information according to the management protocol, and the second OMCI information contains the identifier of the second ONU; and a fourth sending module 94 configured to send the second ONU management message to the management system.

FIG. 10 is a schematic structural diagram of another apparatus for managing an ONU according to an embodiment. As shown in FIG. 10, the apparatus for managing an optical network unit (ONU) provided in this embodiment includes: a fifth receiving module 101 configured to receive a first ONU management message sent from an OLT, where the first ONU management message contains an identifier of a first ONU, the first ONU management message is received by the OLT from a management system; a processing module 102 configured to encapsulate the first ONU management message according to a management protocol to generate first OMCI information, where the first OMCI information contains the identifier of the first ONU; and a fifth sending module 103 configured to send the first OMCI information to the OLT, where the first OMCI information is configured to cause the OLT to send the first OMCI to the first ONU.

The apparatus for managing an ONU provided in this embodiment is used to implement the method for managing an ONU in the embodiment shown in FIG. 4. As for the implementation principle and technical effect of the apparatus for managing an ONU provided in this embodiment, reference may be made the embodiment shown in FIG. 4, which are not repeated herein.

FIG. 11 is a schematic structural diagram of another apparatus for managing an ONU according to an embodiment. As shown in FIG. 11, based on FIG. 10 , the apparatus for managing an optical network unit (ONU) provided in this embodiment further includes: a sixth receiving module 111 configured to receive second OMCI information sent from the OLT, where the second OMCI information contains an identifier of the second ONU; a processing module 102 configured to parse the second OMCI information according to the management protocol to generate a second ONU management message, where the second OMCI information contains an identifier of the second ONU; a sixth sending module 112 configured to send the second ONU management message to the OLT, where the second ONU management message is configured to cause the OLT to send the second ONU management message to the management system.

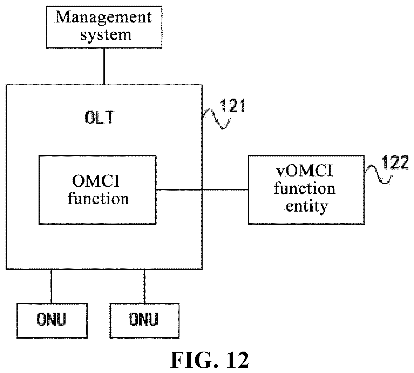

FIG. 12 is a schematic structural diagram of another system for managing an ONU according to an embodiment. As shown in FIG. 12, the system for managing an optical network unit (ONU) provided in this embodiment includes: an optical line terminal (OLT) 121 and a virtual ONU management and control interface (vOMCI) function entity 122. The OLT 121 includes an apparatus for managing an optical network unit (ONU) shown in any one of the embodiments of FIGs. 6 to 9, and the vOMCI function entity 122 includes an apparatus for managing an ONU shown in any one of the embodiments of FIGs. 10 to 11. FIG. 12 further shows the connection relationship between the management system and the ONU, which differs from the PON shown in FIG. 1 merely in that the vOMCI function entity 122 is added.

An embodiment of the present application further provides a storage medium containing computer-executable instructions which are configured to, when executed by a computer processor, cause a method for managing an optical network unit (ONU) to be implemented, the method including: receiving a first ONU management message sent from a management system, where the first ONU management message contains an identifier of a first ONU; sending the first ONU management message to a virtual ONU management and control interface (vOMCI) vOMCI function entity; receiving first OMCI information sent from the vOMCI function entity, where the first OMCI information is generated by the vOMCI function entity encapsulating the first ONU management message according to a management protocol, and the first OMCI information contains the identifier of the first ONU; and sending the first OMCI information to the first ONU.

An embodiment of the present application further provides a storage medium containing computer-executable instructions which are configured to, when executed by a computer processor, cause a method for managing an optical network unit (ONU) to be implemented, the method including: receiving a first ONU management message sent from an OLT, where the first ONU management message contains an identifier of a first ONU, and the first ONU management message is received by the OLT from a management system; encapsulating the first ONU management message according to a management protocol to generate first OMCI information, where the first OMCI information contains the identifier of the first ONU; and sending the first OMCI information to the OLT, where the first OMCI information is configured to cause the OLT to send the first OMCI information to the first ONU.

The above are only exemplary embodiments of the present application and not intended to limit the scope of the present application.

In general, the various embodiments of the present application may be implemented in hardware or dedicated circuits, software, logic or any combination thereof. For example, some aspects may be implemented in hardware, while other aspects may be implemented in firmware or software which may be executed by a controller, microprocessor or other computing device, although the present application is not limited thereto.

Embodiments of the present application may be implemented by a data processor of a mobile device executing computer program instructions, for example in a processor entity, or by hardware, or by a combination of software and hardware. The computer program instructions may be assembler instructions, instruction set architecture (ISA) instructions, machine instructions, machine-related instructions, microcode, firmware instructions, state setting data, or source code or object code written in any combination of one or more programming languages.

The block diagrams of any logic flows in the figures of this application may represent program operations, or may represent interconnected logic circuits, modules, and functions, or may represent a combination of program operations and logic circuits, modules, and functions. The computer program may be stored on a memory. The memory may be of any type suitable to the local technical environment and may be implemented using any suitable data storage technology, such as but not limited to, a read-only memory (ROM), a random access memory (RAM), an optical storage device or system (for example but not limited to a digital video disc (DVD), a compact disc (CD)), etc. The computer-readable medium may include a non-transitory storage medium. The data processor may be of any type suitable to the local technical environment, such as but not limited to, a general purpose computer, a dedicated computer, a microprocessor, a digital signal processor (DSP), an application specific integrated circuit (ASIC), a field-programmable gate array (FGPA), or a processor based on a multi-core processor architecture.

## Claims

1. A method for managing an optical network unit, ONU, comprising:
receiving a first ONU management message sent from a management system, wherein the first ONU management message contains an identifier of a first ONU;
sending the first ONU management message to a virtual ONU management and control interface, vOMCI function entity;
receiving first ONU management and control interface, OMCI information sent from the vOMCI function entity, wherein the first OMCI information is generated by the vOMCI function entity encapsulating the first ONU management message according to a management protocol, and the first OMCI information contains the identifier of the first ONU; and
sending the first OMCI information to the first ONU.

2. The method according to claim 1, wherein before the sending the first ONU management message to the vOMCI function entity, the method further comprises:
judging whether the first ONU management message is managed by the vOMCI function entity; and
wherein the sending the first ONU management message to the vOMCI function entity comprises:
sending, in response to a judgment result that the first ONU management message is managed by the vOMCI function entity, the first ONU management message to the vOMCI function entity.

3. The method according to claim 2, which, after the judging whether the first ONU management message is managed by the vOMCI function entity, further comprises:
parsing, by an OMCI function of an optical line terminal, OLT in response to a judgment result that the first ONU management message is not managed by the vOMCI function entity, the first ONU management message to generate third OMCI information, wherein the third OMCI information contains the identifier of the first ONU; and
sending the third OMCI information to the first ONU.

4. The method according to claim 2, wherein the judging whether the first ONU management message is managed by the vOMCI function entity comprises:
judging whether the first ONU management message contains an identifier of a first ONU, wherein the first ONU is an ONU supporting management by the vOMCI function entity.

5. The method according to claim 2, wherein the judging whether the first ONU management message is managed by the vOMCI function entity comprises:
judging whether a management function corresponding to the first ONU management message is managed by the vOMCI.

6. The method according to claim 1, wherein the sending the first ONU management message to the vOMCI function entity comprises:
sending the first ONU management message to a vOMCI function entity where a management function corresponding to the first ONU management message is located.

7. The method according to any one of claims 1 to 6, further comprising:
receiving second OMCI information sent from a second ONU, wherein the second OMCI information contains an identifier of the second ONU;
sending the second OMCI information to the vOMCI function entity;
receiving a second ONU management message sent from the vOMCI function entity, wherein the second ONU management message is generated by the vOMCI function entity after parsing the second OMCI information according to the management protocol; and
sending the second ONU management message to the management system.

8. A method for managing an optical network unit, ONU, comprising:
receiving a first ONU management message sent from an optical line terminal, OLT, wherein the first ONU management message contains an identifier of a first ONU, and the first ONU management message is received by the OLT from a management system;
encapsulating the first ONU management message according to a management protocol to generate a first ONU management and control interface, OMCI information, wherein the first OMCI information contains the identifier of the first ONU; and
sending the first OMCI information to the OLT, wherein the first OMCI information is configured to cause the OLT to send the first OMCI information to the first ONU.

9. The method according to claim 8, further comprising
receiving second OMCI information sent from the OLT, wherein the second OMCI information contains an identifier of a second ONU;
parsing the second OMCI information according to the management protocol to generate a second ONU management message, wherein the second OMCI information contains the identifier of the second ONU; and
sending the second ONU management message to the OLT, wherein the second ONU management message is configured to cause the OLT to send the second ONU management message to the management system.

10. An apparatus for managing an optical network unit, ONU, comprising:
a first receiving module configured to receive a first ONU management message sent from a management system, wherein the first ONU management message contains an identifier of a first ONU;
a first sending module configured to send the first ONU management message to a virtual ONU management and control interface, vOMCI function entity;
a second receiving module configured to receive first OMCI information sent from the vOMCI function entity, wherein the first OMCI information is generated by the vOMCI function entity encapsulating the first ONU management message according to a management protocol, and the first OMCI information contains the identifier of the first ONU; and
a second sending module configured to send the first OMCI information to the first ONU.

11. The apparatus according to claim 10, further comprising:
a judging module configured to judge whether the first ONU management message is managed by the vOMCI function entity; and
wherein the first sending module is configured to send, in response to a judgment result that the first ONU management message is managed by the vOMCI function entity, the first ONU management message to the vOMCI function entity.

12. The apparatus according to claim 11, further comprising:
a management module configured to parse, by an OMCI function of an optical line terminal ,OLT in response to a judgment result that the first ONU management message is not managed by the vOMCI function entity, the first ONU management message to generate third OMCI information, wherein the third OMCI information contains the identifier of the first ONU; and
wherein the first sending module is further configured to send the third OMCI information to the first ONU.

13. The apparatus according to claim 11, wherein the judging module is configured to judge whether the first ONU management message contains an identifier of a first ONU, wherein the first ONU is an ONU supporting management by the vOMCI function entity.

14. The apparatus according to claim 11, wherein the judging module is configured to judge whether a management function corresponding to the first ONU management message is managed by the vOMCI.

15. The apparatus according to claim 10, wherein the first sending module is configured to send the first ONU management message to a vOMCI function entity where a management function corresponding to the first ONU management message is located.

16. The apparatus according to any of claims 10 to 15, further comprising:
a third receiving module configured to receive second OMCI information sent from a second ONU, wherein the second OMCI information contains an identifier of the second ONU;
a third sending module configured to send the second OMCI information to the vOMCI function entity;
a fourth receiving module configured to receive a second ONU management message sent from the vOMCI function entity, wherein the second ONU management message is generated by the vOMCI function entity after parsing the second OMCI information according to the management protocol; and
a fourth sending module configured to send the second ONU management message to the management system.

17. An apparatus for managing an optical network unit, ONU, comprising:
a first receiving module configured to receive a first ONU management message sent from an optical line terminal, OLT, wherein the first ONU management message contains an identifier of a first ONU, and the first ONU management message is received by the OLT from a management system;
a processing module configured to encapsulate the first ONU management message according to a management protocol to generate a first ONU management and control interface, OMCI information, wherein the first OMCI information contains the identifier of the first ONU; and
a first sending module configured to send the first OMCI information to the OLT, wherein the first OMCI information is configured to cause the OLT to send the first OMCI information to the first ONU.

18. The apparatus according to claim 17, further comprising:
a second receiving module configured to receive second OMCI information sent from the OLT, wherein the second OMCI information contains an identifier of a second ONU;
the processing module configured to parse the second OMCI information according to the management protocol to generate a second ONU management message, wherein the second OMCI information contains the identifier of the second ONU; and
a second sending module configured to send the second ONU management message to the OLT, wherein the second ONU management message is configured to cause the OLT to send the second ONU management message to the management system.

19. A system for managing an optical network unit, ONU, comprising: an optical line terminal, OLT and a virtual ONU management and control interface, vOMCI function entity; wherein
the OLT comprises the apparatus for managing an ONU according to any of claims 10 to 16; and
the vOMCI function entity comprises the apparatus for managing an ONU according to any of claims 17 to 18.

20. A storage medium storing a computer program thereon which, when executed by a processor, causes the method for managing an ONU according to any of claims 1 to 7 to be implemented.

21. A storage medium storing a computer program thereon which, when executed by a processor, causes the method for managing an ONU according to any of claims 8 to 9 to be implemented.
